# DEMANDE DE BREVET EUROPEEN

(11) **EP 4 450 469 A1**
(43) Date de publication de la demande: **23.10.2024**
(21) Numéro de dépôt: 24162893.2
(22) Date de dépôt: 12.03.2024
(51) Int. Cl.: C03C 19/00, C03C 23/00, A44C 27/00

(54) **OBJET DÉCORATIF EN ÉMAIL ET SON PROCÉDÉ DE FABRICATION**

(30) Priorité: 19.04.2023 CH 4042023
(71) Demandeur: Van Cleef & Arpels SA, 1752 Villars-sur-Glâne (CH)
(72) Inventeur: MORARD, Vivien, 74960 Annecy (FR)
(74) Mandataire: Novagraaf International SA

(57) **Abrégé**

L'invention se rapporte à un procédé de fabrication d'un objet décoratif (200), comprenant les étapes suivantes :
- se munir d'un substrat (100), au moins partiellement vitrifié comprenant au moins 40% de silice en poids, formé par exemple en émail,
- effectuer un recuit thermique préliminaire,
- usiner le substrat (100) pour former un objet décoratif (200).

## Description

### Domaine technique de l'invention

La présente invention concerne de manière générale les objets décoratifs en émail ou comprenant une portion en émail. De tels objets décoratifs peuvent être intégrés dans une pièce d'horlogerie ou dans une pièce de joaillerie. La présente invention concerne de tels objets décoratifs et leur procédé de fabrication.

### État de la technique

Il est connu dans l'art antérieur des pièces ou objets décoratifs en émail de fabriquer par exemple un cadran avec une couche d'émail sur une plaque de fond, comme le divulgue le document EP1640822A1. En contrepartie, ce document ne propose aucune solution pour usiner par exemple des pièces en émail (comme par exemple des galettes en émail) qui présentent par exemple une épaisseur de l'ordre du millimètre ou même encore plus épaisses. De telles pièces (sans support ni plaque de fond) sont particulièrement fragiles et des opérations d'usinage conduisent souvent à casser ces pièces. Cela limite les possibilités de conception et/ou provoque de forts taux de rebut.

### Exposé de l'invention

Un but de la présente invention est de répondre aux inconvénients de l'art antérieur mentionnés ci-dessus et en particulier, tout d'abord, de proposer un procédé fiable de fabrication et flexible de pièces en matériau amorphe, vitreux ou vitrifié (comme par exemple des galettes en émail) qui présentent par exemple une épaisseur de l'ordre du millimètre ou même encore plus épaisses.

Pour cela un premier aspect de l'invention concerne un procédé de fabrication d'un objet décoratif, comprenant les étapes suivantes :
- se munir d'un substrat, au moins partiellement vitrifié comprenant au moins 40% de silice en poids, formé par exemple en émail,
- effectuer un recuit thermique préliminaire,
- usiner le substrat pour former un objet décoratif.

Le procédé de fabrication d'un objet décoratif comprend une étape de recuit thermique préliminaire effectuée sur le substrat de qui doit être usiné. Un tel recuit thermique préliminaire permet de libérer les contraintes de fabrication du substrat (typiquement une galette en émail), si bien qu'il est possible d'effectuer sans risque de rupture du substrat la ou les étape(s) d'usinage ultérieure(s). On peut aussi prévoir, grâce à un tel recuit thermique préliminaire, d'usiner des substrats en émail assez épais, par exemple d'une épaisseur supérieure à 1 mm, de préférence supérieure à 2 mm. Il est toutefois tout à fait possible de conduire un tel recuit thermique préliminaire sur des substrats en émail plus fins.

Le procédé de fabrication peut comporter les caractéristiques suivantes, prises individuellement ou en combinaison.

Selon un mode de réalisation, le substrat au moins partiellement vitrifié est une pièce en émail. Autrement dit, le substrat au moins partiellement vitrifié forme ou est formé par une pièce en émail. En particulier, le substrat au moins partiellement vitrifié est réalisé en matériau amorphe. De préférence, le substrat au moins partiellement vitrifié est entièrement réalisé en matériau amorphe.

Selon un mode de réalisation, le recuit thermique préliminaire est un recuit de relaxation de contraintes internes du substrat au moins partiellement vitrifié. Autrement dit, le recuit thermique préliminaire est un recuit de relâchement de contraintes présentes dans le substrat au moins partiellement vitrifié. En particulier, le recuit thermique préliminaire comprend une étape suffisamment longue de maintien à une température de relaxation conduisant à relâcher des contraintes internes du substrat au moins partiellement vitrifié.

Selon un mode de réalisation, le substrat au moins partiellement vitrifié peut être un substrat avec une partie substantielle présentant une structure amorphe ou vitreuse (c'est-à-dire non cristalline), et par exemple le substrat au moins partiellement vitrifié peut être un substrat en émail ou en verre. Par exemple, le substrat au moins partiellement vitrifié peut être un substrat dont une partie d'au moins 50% en poids (de préférence au moins 75 % en poids, de préférence au moins 90% en poids) présente une structure amorphe ou vitreuse, et par exemple le substrat au moins partiellement vitrifié peut être un substrat avec une partie d'au moins 50% en poids (de préférence au moins 75 % en poids, de préférence au moins 90% en poids) en émail ou en verre.

Selon un mode de réalisation, le substrat au moins partiellement vitrifié peut être non métallique, et/ou exempt de partie métallique, ce qui n'empêche pas le substrat au moins partiellement vitrifié de comprendre des composants métalliques dans une proportion inférieure à 40% en poids, de préférence dans une proportion inférieure à 20% en poids, et encore plus préférentiellement dans une proportion inférieure à 10% en poids.

Selon un mode de réalisation, le procédé de fabrication peut comprendre une étape de nettoyage et/ou d'ébavurage effectuée pendant ou après l'étape d'usinage.

Selon un mode de réalisation, le procédé de fabrication peut comprendre une étape comprenant un deuxième recuit thermique appliqué au substrat usiné, et/ou nettoyé et/ou ébavuré. Le deuxième recuit thermique peut servir à relâcher des contraintes internes qui auraient été générées lors de l'étape d'usinage. La pièce terminée est alors moins cassante et/ou moins sensible aux chocs.

Selon un mode de réalisation, le substrat peut présenter une température de transition vitreuse et/ou une température de fusion, le recuit thermique préliminaire, et/ou le deuxième recuit thermique peut comprendre au moins un chauffage respectivement du substrat ou de l'objet décoratif à une température au-dessus de la température de transition vitreuse et/ou de la température de fusion, et de préférence à une température supérieure de 1°C à 30°C à la température de transition vitreuse et/ou de la température de fusion, et encore plus préférentiellement à une température supérieure de 10°C à 20°C à la température de transition vitreuse et/ou de la température de fusion.

Selon un mode de réalisation alternatif, le substrat peut présenter une température dite d'annealing en langue anglaise (ou recuit en langue française) ou une température dite de strain en langue anglaise (ou déformation en langue française), le recuit thermique préliminaire, et/ou le deuxième recuit thermique peut comprendre au moins un chauffage respectivement du substrat ou de l'objet décoratif à une température au-dessus de la température dite d'annealing ou de la température dite de strain, et de préférence à une température supérieure de 1°C à 30°C à la température dite d'annealing ou de la température dite de strain, et encore plus préférentiellement à une température supérieure de 10°C à 20°C à la température dite d'annealing ou de la température dite de strain.

Selon un mode de réalisation alternatif, le recuit thermique préliminaire, et/ou le deuxième recuit thermique peut comprendre au moins un chauffage respectivement du substrat ou de l'objet décoratif à une température supérieure à une température permettant d'atteindre une viscosité du substrat inférieure ou égale à 10¹⁴ Pa.s, préférentiellement à une température permettant d'atteindre une viscosité du substrat inférieure ou égale à 10¹² Pa.s, plus préférentiellement à une température permettant d'atteindre une viscosité du substrat inférieure ou égale à 10⁷ Pa.s, encore plus préférentiellement à une température permettant d'atteindre une viscosité du substrat inférieure ou égale à 10³ Pa.s.

On peut prévoir de mesurer ces viscosités selon la norme ISO 7884-1:1987, et/ou ISO 7884-2:1987, et/ou ISO 7884-3:1987, et/ou ISO 7884-4:1987, et/ou ISO 7884-5:1987, et/ou ISO 7884-6:1987, et/ou ISO 7884-7:1987, et/ou ISO 7884-8:1987.

Selon un mode de réalisation, le recuit thermique préliminaire, et/ou le deuxième recuit thermique peut comprendre au moins une étape de refroidissement avec une vitesse de descente en température inférieure à 10°C/minute, de préférence inférieure à 5°C/minute, et de préférence inférieure à 3°C/minute.

Selon un mode de réalisation, le recuit thermique préliminaire, et/ou le deuxième recuit thermique peut comprendre au moins une étape de chauffage avec une vitesse de montée en température inférieure à 15°C/minute, et de préférence inférieure à 10°C/ minute, de préférence inférieure à 5°C/minute, et de préférence inférieure à 3°C/minute.

Selon un mode de réalisation, le recuit thermique préliminaire, et/ou le deuxième recuit thermique peut comprendre au moins une étape de maintien à un palier de température maximale du recuit thermique préliminaire et/ou du deuxième recuit thermique d'au moins 15 minutes, de préférence d'au moins 20 minutes.

Selon un mode de réalisation, le procédé de fabrication peut comprendre, de préférence après le deuxième recuit thermique, une étape de polissage consistant à polir au moins une surface à polir de l'objet décoratif.

Selon un mode de réalisation, l'étape de polissage peut comprendre une étape consistant à exposer la surface à polir à une flamme de chalumeau.

Selon un mode de réalisation, l'étape de polissage peut comprendre une étape consistant à exposer la surface à polir à une température comprise entre 800°C et 1650°C.

Selon un mode de réalisation, l'étape d'usinage peut comprendre la mise en oeuvre d'une source laser, de préférence une source laser à impulsions, de préférence une source laser à impulsions agencée pour émettre des impulsions courtes ou ultra courtes, de l'ordre de la nanoseconde, de l'ordre de la picoseconde ou encore de l'ordre de la femtoseconde.

Selon un mode de réalisation, l'étape d'usinage peut comprendre la mise en oeuvre d'une opération d'usinage mécanique, comme une étape de gravure.

Selon un mode de réalisation, l'étape d'usinage peut comprendre au moins une étape consistant à usiner localement le substrat sur au moins 50% de son épaisseur, et de préférence sur toute son épaisseur.

Selon un mode de réalisation, l'étape d'usinage peut comprendre au moins une étape consistant à former une surface en relief sur le substrat, de préférence un relief correspondant à au moins 20 % de l'épaisseur du substrat, de préférence à au moins 50% de l'épaisseur du substrat. Le relief est formé lors de l'étape d'usinage, qui revient à retirer au moins localement une quantité de matière substantielle de matière, pour réduire l'épaisseur et former des reliefs décoratifs. On peut prévoir des formes en creux, des trous, borgnes ou même débouchant, des cavités...

Selon un mode de réalisation, le procédé de fabrication peut comprendre une étape initiale de découpe du substrat dans un bloc d'émail brut.

Selon un mode de réalisation, le substrat peut présenter une épaisseur inférieure à 10 mm, de préférence inférieure à 6 mm, et de préférence inférieure à 3 mm.

Selon un mode de réalisation, le substrat peut présenter une matière homogène, ou peut présenter une matière hétérogène, telle qu'une matière multicouche ou avec des veines de matières et/ou de couleurs différentes. On peut noter que le recuit thermique préliminaire et/ou le deuxième recuit peut être conduit sur tout type de substrat : homogène ou hétérogène.

Selon un mode de réalisation, le substrat peut comprendre au moins 50% en masse de silice, de l'alumine, du calcium, du sodium, de l'oxyde de titane, et au moins un colorant.

Selon un mode de réalisation, le substrat peut être exempt de substrat ou d'insert métallique, ou de substrat ou d'insert en céramique ou en lave. On peut noter que le substrat est essentiellement et/ou uniquement constitué d'émail. Le substrat peut être exempt de support, d'insert de toute nature.

Un deuxième aspect de l'invention peut se rapporter à un objet décoratif formé par le procédé de fabrication selon le premier aspect.

Selon un mode de réalisation, l'objet décoratif peut présenter une épaisseur finale d'au moins 50% l'épaisseur initiale du substrat, de préférence d'au moins 70% l'épaisseur initiale du substrat, et de préférence d'au moins 85% l'épaisseur initiale du substrat. Autrement dit l'étape d'usinage peut conduire à retirer 50% de l'épaisseur initiale du substrat, ou 30% de l'épaisseur initiale du substrat, ou encore 15% de l'épaisseur initiale du substrat.

Selon un mode de réalisation, le substrat et/ou l'objet décoratif peut présenter une masse inférieure à 500 g, de préférence une masse inférieure à 200 g et encore plus préférentiellement une masse inférieure à 50 g. Selon un mode de réalisation, lors des opérations de recuit ou de traitement thermique, la masse totale des pièces traitées dans le four de cuisson peut présenter une masse inférieure à 2500 g, de préférence une masse inférieure à 1200 g et encore plus préférentiellement une masse inférieure à 500 g.

Un troisième aspect de l'invention peut se rapporter à une pièce d'horlogerie ou de joaillerie formée par ou comprenant un objet décoratif selon le deuxième aspect.

### Description des figures

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :

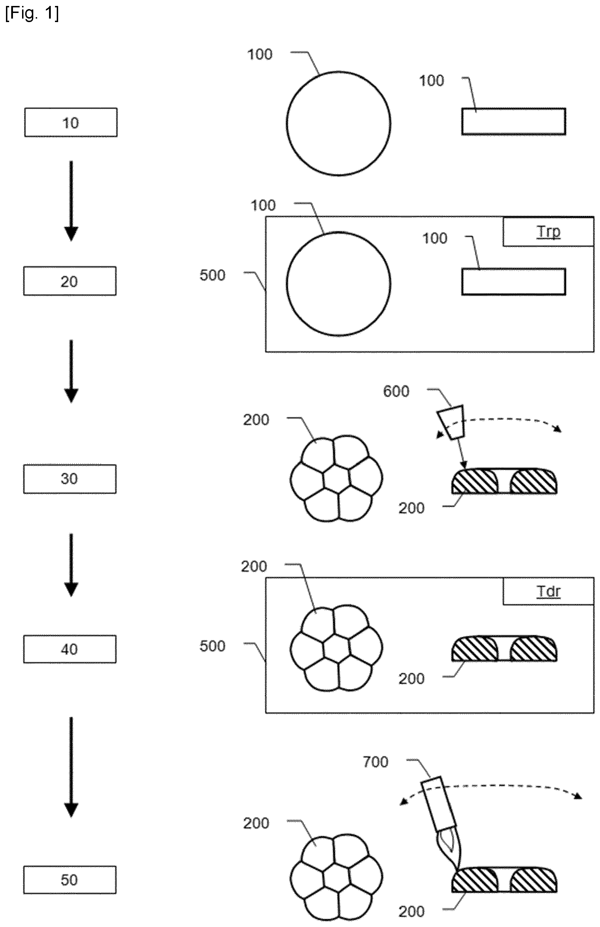

[Fig. 1] représente :
- sur une colonne de gauche, une série d'étape d'un procédé de fabrication d'un objet décoratif,
- sur une colonne du milieu, une vue de dessus de l'objet décoratif à chaque étape de fabrication,
- sur une colonne de droite, une vue de côté ou en coupe de l'objet décoratif à chaque étape de fabrication.

### Description détaillée de mode(s) de réalisation

La figure 1 représente une série de cinq étapes d'un procédé de fabrication d'un objet décoratif, avec pour chaque étape une représentation de l'objet décoratif an cours de fabrication.

La première étape 10 peut comprendre une étape consistant à se munir d'un substrat 100 en émail, ici une galette d'émail sous la forme d'un cylindre (en vue de dessus au milieu, et en vue de côté tout à droite de la figure 1).

On peut prévoir un substrat 100 en émail formé à partir de silice (environ 55% en masse), d'alumine, d'oxyde de bore, de calcium, de sodium, d'oxyde de titane, et par exemple pour la couleur, de l'or (200ppm en masse). On peut prévoir une épaisseur de quelques millimètres, par exemple comprise entre 6 mm et 3 mm.

La deuxième étape 20 peut comprendre une étape consistant à placer le substrat 100 en émail dans un four de cuisson 500 pour lui imposer un recuit thermique préliminaire, à une température de recuit thermique préliminaire Trp.

En particulier, si le substrat 100 en émail présente une température de transition vitreuse et/ou une température de fusion, le recuit thermique préliminaire comprend au moins un chauffage du substrat 100 en émail à une température de recuit thermique préliminaire Trp supérieure à la température de transition vitreuse et/ou de la température de fusion, et de préférence à une température de recuit thermique préliminaire Trp supérieure de 1°C à 30°C à la température de transition vitreuse et/ou de la température de fusion, et encore plus préférentiellement à une température de recuit thermique préliminaire Trp supérieure de 10°C à 20°C à la température de transition vitreuse et/ou de la température de fusion.

Autrement dit, si le substrat 100 en émail présente une température dite de strain et/ou une température dite d'annealing et/ou une température de transition vitreuse et/ou une température de fusion, alors l'étape de chauffage peut consister à chauffer le substrat 100 en émail à une température supérieure à la température dite de strain et/ou à une température supérieure à la température dite d'annealing et/ou à une température supérieure à la température de transition vitreuse et/ou à une température supérieure à la température de fusion, respectivement.

En fonction de la composition du substrat 100 en émail, la température maximale de chauffage peut typiquement être comprise entre 500°C et 800°C.

Le chauffage peut être conduit dans le four de cuisson 500 avec une étape de chauffage avec une vitesse de montée en température prise dans le four d'environ 7°C/min, un palier de maintien à la température maximale durant au moins 20 minutes ou plus préférentiellement 30 minutes, et une étape de refroidissement avec une vitesse de descente de température prise dans le four d'environ 2.5°C/min.

Au cours de cette étape de recuit thermique préliminaire, les contraintes qui subsisteraient dans le substrat 100 en émail sont relâchées, ce qui permet de prévoir une opération d'usinage.

En effet, et comme le montre la figure 1, la troisième étape 30 peut comprendre une étape d'usinage, par enlèvement de matière, du substrat 100 en émail pour former un objet décoratif 200. Dans l'exemple de la figure 1, on peut prévoir un usinage avec une source laser 600, qui peut émettre des impulsions laser, par exemples des impulsions d'une durée de l'ordre de la picoseconde, ou de l'ordre de la femtoseconde. Comme le montre la partie à droite de la figure 1, on peut typiquement imposer un mouvement relatif entre la source laser 600 et l'objet décoratif 200.

Dans l'exemple représenté, l'objet décoratif 200 est un motif floral, et l'étape d'usinage de la troisième étape 30 permet de former des pétales bombés et un trou central traversant. On peut noter que l'usinage dans l'exemple donné est une étape qui conduit à retirer de la matière sur toute l'épaisseur initiale du substrat 100 en émail, au moins au niveau du trou central traversant de l'objet décoratif 200.

Au cours de la troisième étape 30 du procédé de fabrication de la figure 1 (ou juste après), on peut prévoir une opération d'ébavurage et/ou de nettoyage de l'objet décoratif 200. Une telle opération d'ébavurage et/ou de nettoyage de l'objet décoratif 200 peut même être réalisée au cours de l'étape d'usinage, c'est-à-dire sur l'objet décoratif 200 partiellement terminé.

La quatrième étape 40 du procédé de fabrication peut comprendre un deuxième recuit thermique en plaçant l'objet décoratif 200 dans le four de cuisson 500 pour le chauffer à une température de deuxième recuit Tdr. La température de deuxième recuit Tdr peut être similaire à la température de recuit thermique préliminaire Trp, ou peut être différente.

En tout état de cause, si l'objet décoratif 200 (tout comme le substrat 100 en émail) présente une température de transition vitreuse et/ou une température de fusion, le deuxième recuit thermique comprend au moins un chauffage de l'objet décoratif 200 à la température de deuxième recuit Tdr supérieure à la température de transition vitreuse et/ou de la température de fusion, et de préférence à une température de deuxième recuit Tdr supérieure de 1°C à 30°C à la température de transition vitreuse et/ou de la température de fusion, et encore plus préférentiellement à une température de deuxième recuit Tdr supérieure de 10°C à 20°C à la température de transition vitreuse et/ou de la température de fusion.

Le chauffage peut être conduit dans le four de cuisson 500 avec une étape de chauffage avec une vitesse de montée en température prise dans le four d'environ 7°C/min, un palier de maintien à la température maximale durant au moins 20 minutes ou plus préférentiellement 30 minutes, et une étape de refroidissement avec une vitesse de descente de température prise dans le four d'environ 2.5°C/min.

Au cours de cette étape de deuxième recuit thermique, les contraintes qui auraient été générées lors de l'étape d'usinage et/ou d'ébavurage sont relâchées, ce qui permet de proposer un objet décoratif 200 résistant et/ou peu sensible aux chocs et/ou aux sollicitations mécaniques ou thermiques ultérieures.

Le procédé de fabrication peut comprendre une cinquième étape 50 qui consiste à polir l'objet décoratif 200. Dans l'exemple représenté, on peut prévoir une étape de polissage et/ou brillantage en exposant l'objet décoratif 200 à la flamme d'un chalumeau, par exemple un chalumeau au butane. Lors de cette étape, on peut imposer à l'objet décoratif 200 des températures locales comprises entre 700°C et 1650°C, comme par exemple des températures de 900°C.

On peut noter que le recuit thermique préliminaire, et/ou le deuxième recuit thermique, permet de proposer des étapes ultérieures de fabrication qui peuvent être effectuées sans risque de casser la pièce, et/ou sur une pièce avec une épaisseur notable (au moins 1 ou 2 millimètres par exemple). Au cours du recuit thermique préliminaire, et/ou du deuxième recuit thermique, on peut prévoir de chauffer suffisamment et/ou suffisamment longtemps la pièce pour la ramollir, sans toutefois la déformer. En particulier, on peut prévoir de faire reposer les pièces sur des supports qui évitent des déformations par gravité.

L'étape d'usinage peut être effectuée pour enlever de la matière sur toute l'épaisseur de l'ébauche ou de la pièce de départ, on peut prévoir de combiner les techniques d'usinage au cours de cette étape d'usinage, comme par exemple un usinage laser et un usinage mécanique, dans n'importe quel ordre.

Dans la présente demande, il est fait référence à la température de transition vitreuse et/ou de la température de fusion et/ou à la température d'annealing, et/ou à la température de strain. On peut prévoir de mesurer ces températures selon la norme ISO 7884-1:1987, et/ou ISO 7884-2:1987, et/ou ISO 7884-3:1987, et/ou ISO 7884-4:1987, et/ou ISO 7884-5:1987, et/ou ISO 7884-6:1987, et/ou ISO 7884-7:1987, et/ou ISO 7884-8:1987.

Dans la présente demande, la température de transition vitreuse d'un verre (ou d'un corps vitreux comme un émail) peut être définie comme étant le milieu de l'intervalle de température dans lequel il devient progressivement plus visqueux et passe de l'état solide à l'état liquide.

Dans la présente demande, la température de fusion peut être considérée comme la température à laquelle le corps considéré commence à devenir liquide. Dans le cas d'un corps pur ou eutectique, il s'agit de la température à laquelle les états liquide et solide de cette substance peuvent coexister à l'équilibre. Si l'on chauffe la substance (initialement solide) elle fond à cette température et la température ne peut pas augmenter tant que tout le solide n'a pas disparu. Dans le cas d'un corps non-pur ou non-eutectique, on peut considérer que la température de fusion est celle à laquelle au moins un des constituants du corps non-pur ou non-eutectique commence à fondre.

On peut prévoir de mesurer la température de transition vitreuse comme la température de fusion, la température d'annealing, et/ou la température de strain avec une technique de calorimétrie différentielle à balayage (en anglais, Differential Scanning Calorimetry ou DSC). On peut prévoir par exemple de mesurer ces températures en chauffant ou en refroidissant un échantillon à une vitesse de 3°C/minute.

### Application industrielle

Un objet décoratif selon la présente invention, et sa fabrication, sont susceptibles d'application industrielle.

On comprendra que diverses modifications et/ou améliorations évidentes pour l'homme du métier peuvent être apportées aux différents modes de réalisation de l'invention décrits dans la présente description sans sortir du cadre de l'invention. En particulier, on peut noter que l'ordre des étapes n'est pas limitatif ni impératif. L'objet décoratif peut être réalisé uniquement en émail, mais on peut prévoir des parties ou des inserts qui ne sont pas en émail (pouvant prévus dans le substrat en émail de base, ou rapportés en cours de fabrication).

## Revendications

1. Procédé de fabrication d'un objet décoratif (200), comprenant les étapes suivantes :
- se munir d'un substrat (100), au moins partiellement vitrifié comprenant au moins 40% de silice en poids, formé par exemple en émail,
- effectuer un recuit thermique préliminaire,
- usiner le substrat (100) pour former un objet décoratif (200).

2. Procédé de fabrication selon la revendication 1, comprenant une étape de nettoyage et/ou d'ébavurage effectuée pendant ou après l'étape d'usinage.

3. Procédé de fabrication selon la revendication 1 ou 2, comprenant une étape comprenant un deuxième recuit thermique appliqué au substrat usiné, et/ou nettoyé et/ou ébavuré lorsque le procédé de fabrication dépend de la revendication 2.

4. Procédé de fabrication selon l'une des revendications 1 à 3, le substrat (100) présentant une température de transition vitreuse et/ou une température de fusion, et dans lequel le recuit thermique préliminaire, et/ou le deuxième recuit thermique, lorsque le procédé de fabrication dépend de la revendication 3, comprend au moins un chauffage respectivement du substrat (100) ou de l'objet décoratif (200) à une température au-dessus de la température de transition vitreuse et/ou de la température de fusion, et de préférence à une température supérieure de 1°C à 30°C à la température de transition vitreuse et/ou de la température de fusion, et encore plus préférentiellement à une température supérieure de 10°C à 20°C à la température de transition vitreuse et/ou de la température de fusion.

5. Procédé de fabrication selon l'une des revendications 1 à 4, dans lequel le recuit thermique préliminaire, et/ou le deuxième recuit thermique lorsque le procédé de fabrication dépend de la revendication 3, comprend au moins une étape de refroidissement avec une vitesse de descente en température inférieure à 10°C/minute, de préférence inférieure à 5°C/minute, et de préférence inférieure à 3°C/minute.

6. Procédé de fabrication selon l'une des revendications 1 à 5, dans lequel le recuit thermique préliminaire, et/ou le deuxième recuit thermique lorsque le procédé de fabrication dépend de la revendication 3, comprend au moins une étape de chauffage avec une vitesse de montée en température inférieure à 15°C/minute, et de préférence inférieure à 10°C/ minute, de préférence inférieure à 5°C/minute, et de préférence inférieure à 3°C/minute.

7. Procédé de fabrication selon l'une des revendications 1 à 6, dans lequel le recuit thermique préliminaire, et/ou le deuxième recuit thermique lorsque le procédé de fabrication dépend de la revendication 3, comprend au moins une étape de maintien à un palier de température maximale du recuit thermique préliminaire et/ou du deuxième recuit thermique d'au moins 15 minutes, de préférence d'au moins 20 minutes.

8. Procédé de fabrication selon l'une des revendications 1 à 7, comprenant, de préférence après le deuxième recuit thermique lorsque le procédé de fabrication dépend de la revendication 3, une étape de polissage consistant à polir au moins une surface à polir de l'objet décoratif (200).

9. Procédé de fabrication selon la revendication 8, dans lequel l'étape de polissage comprend une étape consistant à exposer la surface à polir à une flamme de chalumeau (700).

10. Procédé de fabrication selon l'une des revendications 8 ou 9, dans lequel l'étape de polissage comprend une étape consistant à exposer la surface à polir à une température comprise entre 800°C et 1650°C.

11. Procédé de fabrication selon l'une des revendications 1 à 10, dans lequel l'étape d'usinage comprend la mise en oeuvre d'une source laser (600), de préférence une source laser (600) à impulsions, de préférence une source laser (600) à impulsions agencée pour émettre des impulsions d'une durée de l'ordre de la femtoseconde.

12. Procédé de fabrication selon l'une des revendications 1 à 11, dans lequel l'étape d'usinage comprend la mise en oeuvre d'une opération d'usinage mécanique, comme une étape de gravure.

13. Procédé de fabrication selon l'une des revendications 1 à 12, dans lequel l'étape d'usinage comprend au moins une étape consistant à usiner localement le substrat (100) sur au moins 50% de son épaisseur, et de préférence sur toute son épaisseur.

14. Procédé de fabrication selon l'une des revendications 1 à 13, dans lequel l'étape d'usinage comprend au moins une étape consistant à former une surface en relief sur le substrat, de préférence un relief correspondant à au moins 20 % de l'épaisseur du substrat, de préférence à au moins 50% de l'épaisseur du substrat.

15. Procédé de fabrication selon l'une des revendications 1 à 14, comprenant une étape initiale de découpe du substrat (100) dans un bloc d'émail brut.

16. Procédé de fabrication selon l'une des revendications 1 à 15, dans lequel le substrat (100) :
- présente une épaisseur inférieure à 10 mm, de préférence inférieure à 6 mm, et de préférence inférieure à 3 mm, et/ou
- présente une matière homogène, ou présente une matière hétérogène, telle qu'une matière multicouches ou avec des veines de matières et/ou de couleurs différentes, et/ou
- comprend au moins 50% en masse de silice, de l'alumine, du calcium, du sodium, de l'oxyde de titane, et au moins un colorant, et/ou
- est exempt de substrat ou d'insert métallique, ou de substrat ou d'insert en céramique ou en lave.

17. Objet décoratif (200) formé par le procédé de fabrication selon l'une des revendications précédentes.

18. Objet décoratif (200) selon la revendication précédente, présentant une épaisseur finale d'au moins 50% l'épaisseur initiale du substrat (100), de préférence d'au moins 70% l'épaisseur initiale du substrat (100), et de préférence d'au moins 85% l'épaisseur initiale du substrat (100).

19. Pièce d'horlogerie ou de joaillerie formée par ou comprenant un objet décoratif (200) selon l'une des deux revendications précédentes.
